# EUROPÄISCHE PATENTSCHRIFT

(11) **EP 1 532 859 B1**
(45) Veröffentlichungstag und Bekanntmachung des Hinweises auf die Patenterteilung: **13.02.2008**
(21) Anmeldenummer: 04105844.7
(22) Anmeldetag: 17.11.2004
(51) Int. Cl.: A01F 15/14, B65B 13/26

(54) **Knoteranordnung**
Knotting device
Dispositif noueur

(30) Priorität: 21.11.2003 US 719096
(43) Veröffentlichungstag der Anmeldung: 25.05.2005
(73) Patentinhaber: DEERE & COMPANY, Moline, Illinois 61265-8098 (US)
(72) Erfinder: Rotole, David Vincent, IA Iowa 52501 (US)
(74) Vertreter: Magin, Ludwig Bernhard

(56) Entgegenhaltungen:
- EP-A- 0 956 761
- FR-A- 2 115 768
- US-A- 3 418 014
- US-A- 4 022 121

## Beschreibung

Die Erfindung betrifft eine Knoteranordnung mit einer Antriebswelle, einer Mehrzahl von auf dieser Antriebswelle angebrachten Knotereinheiten mit jeweils einem Antriebszahnrad mit einer Nabe, welche auf die Antriebswelle derart aufgesetzt ist, dass sie mit dieser rotieren und mit Bezug auf die Antriebswelle in axialer Richtung bewegt werden kann, und einer Einstelleinrichtung, die eine axiale Lücke zwischen gegenüberliegenden Stirnflächen aneinander angrenzender Knotereinheiten derart einstellbar überspannt, dass sie die axiale Erstreckung der Lücke bestimmt.

Konventionelle Garnbinde oder Knoteranordnungen einer Ballenpresse zur Herstellung quadratischer Ballen bzw. quadratischer Großballen weisen üblicherweise eine Mehrzahl an Knoterzusammenbauten oder -einheiten auf, die nebeneinander auf einer Antriebswelle angeordnet sind, wobei die Anzahl an Knotereinheiten der Anzahl an Garnschlaufen entspricht, die um den Ballen geschlungen werden und wobei diese Anzahl an Garnschlaufen von der Größe des hergestellten Ballens abhängig ist. Jede Knotereinheit weist einen Tragrahmen, der eine Mehrzahl an Knoterkomponenten bzw. -bauteilen/-gruppen trägt, und ein Antriebszahnrad auf. Der Tragrahmen ist entweder auf der Antriebswelle angrenzend an das Antriebszahnrad oder auf einer Nabe eines zugeordneten Antriebszahnrades angeordnet, wobei das letztere ein Zwischenzahnrad ist, das Zahnsegmente aufweist, die entsprechend angeordnet sind, um mit Antriebszahnrädern ausgewählter Knoterkomponenten zu kämmen, und Nockenflächen aufweisen, um an Nockenrollen oder -folgern anzugreifen, um die Bewegung der Knoterkomponenten zu steuern. In beiden Fällen sind die Tragrahmen feststehend, während die Antriebswelle oder die Naben frei in einer Manschette oder einem Auge des Tragrahmens rotieren. Eine Ausrichtung des Antriebszahnrades und der angetriebenen Komponenten erfolgt mittels Distanzscheiben, Abstandhalter oder andere Einrichtungen.

Die DE-A-2 736 649 zeigt eine Verschnürvorrichtung für eine Ballenpresse mit mehreren auf einer Welle angeordneten Verschnüreinheiten. Auf der Welle ist ein Justierelementpaar mit zwei abgeschrägten, aneinander angreifenden Elementen vorgesehen, die zur Einstellung des Abstandes zwischen den Verschnüreinheiten gegeneinander verdreht werden können, um dann jeweils mittels einer Befestigungsschraube an der Welle gesichert zu werden.

Das der Erfindung zugrunde liegende Problem wird in der aufwändigen Handhabung bekannter Knoteranordungen gesehen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Knoteranordnung zur Verfügung gestellt, die eine effektive Einstellung aneinander angrenzender Knotereinheiten ermöglicht, wobei diese Einstellung unter Zuhilfenahme einfacher Werkzeuge, wie beispielsweise eines gewöhnlichen Schraubenschlüssels, erfolgen kann und verhältnismäßig kostengünstig ist. Die Knoteranordnung weist eine Antriebswelle, eine Mehrzahl von auf dieser Antriebswelle angebrachten Knotereinheiten mit jeweils einem Antriebszahnrad mit einer Nabe, welche auf die Antriebswelle derart aufgesetzt ist, dass sie mit dieser rotieren und mit Bezug auf die Antriebswelle in axialer Richtung bewegt werden kann, und eine Einstelleinrichtung auf, die eine axiale Lücke zwischen gegenüberliegenden Stirnflächen aneinander angrenzender Knotereinheiten derart einstellbar überspannt, dass sie die axiale Erstreckung der Lücke bestimmt. Die Einstelleinrichtung weist zumindest ein Einstellelement, durch dessen Hinein- bzw. Herausschrauben der axiale Abstand zwischen den Knotereinheiten verstellt werden kann, und ein Sicherungselement auf, mittels dem das Einstellelement lösbar festlegbar ist. Unter einem Hinein- bzw. Herausschrauben ist eine axiale Bewegung eines mit einem Gewinde (Außengewinde, Innengewinde) versehenen ersten Bauteils mit Bezug auf einen weiteren, mit einem passenden bzw. korrespondierenden Gewinde (Innengewinde, Außengewinde) versehenen Bauteil zu verstehen.

Gemäß einer ersten Ausführungsform, die eingesetzt werden kann, wenn der Tragrahmen auf der Nabe des Antriebszahnrades angeordnet ist, ist zumindest eine erste Gewindebohrung in einer axialen Fläche bzw. einer Stirnfläche jedes Antriebszahnrades vorgesehen, in die ein Einstellmittel in Form einer Distanzschraube eingeschraubt ist, deren Kopf mit einer Stirn- oder Endfläche der Nabe des angrenzenden Antriebszahnrades zusammenwirkt bzw. an dieser anliegt. Eine Abstandseinstellung kann während einer Montage der Antriebszahnräder auf der Antriebswelle durchgeführt werden, indem die Einstellmittel bzw. die Distanzschrauben in einer ersten Richtung eingeschraubt werden, um sie in die Nabe hineinzutreiben oder in die andere Richtung herausgedreht werden, um sie aus der Nabe herauszubewegen. Zur Ortssicherung des Einstellelements bzw. der Distanzschraube kann eine selbstsichernde Mutter vorgesehen sein.

Gemäß einer zweiten Ausführungsform, die insbesondere verwendet werden kann, wenn die Antriebszahnräder Naben aufweisen, die einen kleineren Außendurchmesser aufweisen, der es unpraktisch oder unmöglich macht, als Distanzschrauben ausgebildete Einstellmittel zu verwenden, kann auch ein Abstandhalter verwendet werden, der einen äußeren Durchmesser aufweist, der größer ist als der Durchmesser der Nabe der Antriebszahnräder. Der Abstandhalter kann auf der Antriebswelle zwischen angrenzenden Knotereinheiten vorgesehen sein, so dass der Abstandhalter an einer ersten Stirnfläche der Knotereinheit anliegt, wobei eine zweite Fläche, welche eine Innenbohrung aufweist, über die Nabe des Antriebszahnrades der anderen Knotereinheit passt. Diese zweite Fläche weist zumindest eine Gewindebohrung auf, in der ein Einstellelement vorzugsweise in der Art einer Distanzschraube angeordnet ist, deren Kopf mit einer axialen Fläche bzw. einer Stirnfläche der anderen Knotereinheit zusammenwirkt bzw. an dieser angreift oder anliegt. Das Einstellelement kann wiederum in die Gewindebohrung hinein oder aus dieser heraus geschraubt werden, um eine Einstellung des Abstands zwischen den Knotereinheiten zu erreichen.

Gemäß einer dritten Ausführungsform, welche insbesondere verwendet werden kann, wenn die Antriebszahnräder Naben kleinen Durchmessers aufweisen, können die insbesondere als Distanzschrauben ausgebildeten Einstellelemente in Gewindebohrungen eingeschraubt werden, welche in einem Tragrahmen einer Knotereinheit vorgesehen sind, wobei die Köpfe der Einstellelemente bzw. der Distanzschrauben mit einer Fläche bzw. Stirnfläche des Antriebszahnrades der angrenzenden Knotereinheit zusammenwirken bzw. an dieser anliegen.

Gemäß einer vierten Ausführungsform kann ein Abstandhalter ähnlich dem der zweiten Ausführungsform verwendet werden. Dieser ist aber nicht mit einem Einstellelement in der Art einer Distanzschraube versehen. Vielmehr ist ein Bereich des Abstandhalter der eine Innenbohrung aufweist mit einem Innengewinde versehen, das mit der mit einem Außengewinde versehenen Nabe des Antriebszahnrades der Knotereinheit zusammenwirkt. An dem Abstandhalter sind Flächen vorgesehen, an denen mit einem Werkzeug angegriffen werden kann, und es ist eine Kontermutter auf dem Gewinde der Nabe vorgesehen, um den Abstandhalter in einer gewählten axialen Stellung zu sichern, um so eine Einstellung des Abstands zwischen angrenzenden Knotereinheiten zu bewirken.

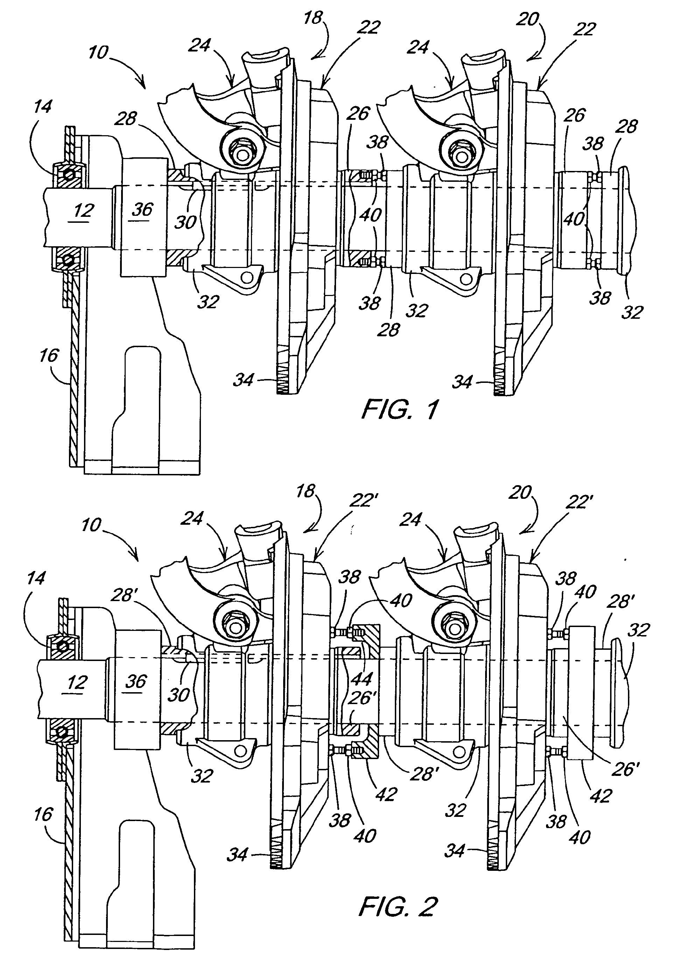

In der Zeichnung sind nachfolgend näher beschriebene Ausführungsbeispiele der Erfindung dargestellt. Es zeigen die
Fig. 1 - 4 schematische Ansichten unterschiedlicher Ausführungsformen einer Knoterantriebswelle, auf der eine Mehrzahl von Knotereinheiten axial einstellbar vorgesehen sind.

Es wird nun zuerst auf Figur 1 Bezug genommen, in der ein Bereich einer Knoteranordnung 10 mit einer Antriebswelle 12 gezeigt wird, die gegenüberliegende Endbereiche aufweist, die in entsprechenden Lagern 14 gelagert sind, die an quer beabstandeten Wänden 16 eines Ballenpressenrahmens einer Quadergroßballenpresse oder einer Quaderballenpresse angebracht sind. Auf der Antriebswelle 12 ist eine Mehrzahl identischer Knoterantriebszusammenbauten bzw. Knotereinheiten angebracht, von denen nur zwei bei 18 und 20 dargestellt sind, es aber deutlich sein sollte, dass die Gesamtzahl an Knotereinheiten normalerweise in Übereinstimmung mit der Größe des produzierten Ballens variiert, und der Gesamtzahl an Garnschlaufen, die um den Ballen gewickelt werden, entsprechen würde. Jede der Knotereinheiten 18 und 20 weist ein Antriebszahnrad 22 und einen Tragrahmen 24 auf, der wie auch die Knoterbauteile, die von ihm getragen werden, nur teilweise gezeigt wird.

Die Antriebszahnräder 22 weisen eine Nabe mit einem, wie dies Figur 1 entnommen werden kann, kurzen rechten Nabenbereich 26 und einem länglichen linken Nabenbereich 28 auf. Die Antriebszahnräder 22 weisen eine Feder 30 auf, um mit der Antriebswelle 12 zu rotieren und sich bezogen auf diese axial bewegen zu können.

Die Tragrahmen 24 weisen jeder eine geschlitzte Manschette 32 mit gegenüberliegenden Hälften auf, die um den linken Nabenbereich 28 des entsprechenden Antriebszahnrads 22 lösbar geklemmt sind, wobei die Manschette 32 derart dimensioniert ist, dass der Nabenbereich 28 darin frei drehen kann. Es soll deutlich sein, dass der linke Nabenbereich 28 jedes der Antriebszahnräder 22 verkürzt werden kann, in welchem Fall die Manschette 32 jedes der Tragrahmen 24 direkt auf der Antriebswelle 12 vorgesehen wäre, um es der Antriebswelle 12 zu erlauben, frei in der Manschette 32 zu drehen. Die angetriebenen, nicht klar dargestellten Knoterkomponenten, die von jedem Tragrahmen 24 getragen werden, weisen jeweils ein angetriebenes Zahnrad oder einen Nockenfolger auf, die entsprechend angeordnet sind, um mit verschiedenen Zahnsegmenten zu kämmen oder um an Nockenflächen des angrenzenden Antriebszahnrades 22 anzugreifen, wobei ein Ausschnitt eines Zahnsegments bei 34 dargestellt ist.

Die Knotereinheiten 18 und 20 sind entlang der Antriebswelle 12 voneinander axial gleich beabstandet angeordnet. Rechte und linke, Anschläge bildende Schultern 36 werden von der Antriebswelle 12 aufgenommen und durch eine geeignete Sicherungseinrichtung an Stellen links- und rechtsseitig der Ballenbildungskammer (nicht gezeigt) der Ballenpresse, an der die Knoterantriebswelle 12 verwendet wird, gehalten. Eine mögliche Ausführungsform der Schulter besteht darin, diese aus trennbaren Hälften vorzusehen, welche durch ein Paar von Schrauben verbunden werden, die sich durch fluchtende Löcher in den Hälften, die an gegenüberliegenden Seiten der Knoterantriebswelle 12 erstrecken. Es ist begreiflich, dass die linke Schulter 36, die einzige dargestellte Schulter, durch eine an die Antriebswelle 12 angeformte Schulter bestimmt werden kann.

Die linke Fläche oder Stirnfläche des Nabenbereichs 28 des Antriebszahnrades 22 der Knotereinheit 18 ist an der linken Schulter 36 angeordnet. An diametral beabstandeten Stellen der rechten Stirnflächen des rechten Endbereichs 28 der Naben jedes der Antriebszahnräder 22 ist ein Paar gebohrter und mit einem Gewinde versehener Bohrungen vorgesehen, in welchen ein Paar von Einstellelementen 38, die als Hebe- bzw. Distanzschrauben ausgeführt sind, entsprechend aufgenommen werden kann. Auf jedes Einstellelement 38 ist ein als selbstsichernde Mutter ausgeführtes Sicherungselement 40 aufgesetzt, um dessen axiale Stellung in der zugeordneten Gewindebohrung festzulegen. Anstelle der selbstsichernden Mutter könnte ein Sicherungselement 40 mit einer Nase verwendet werden, die derart bewegt werden kann, dass sie mit dem Kopf des Sicherungselements 40 in und außer Kontakt gelangt, um seine Bewegung zu verhindern, sobald es eingestellt ist. Die Köpfe der Einstellelemente 38 der Antriebszahnräder 22 der Knotereinheiten 18 lasten auf der linken Stirnseite des Nabenbereichs 28 des Antriebszahnrades 22 der Knotereinheit 20 und die Köpfe der Sicherungselemente 38 auf der rechten Seite des Nabenbereichs 26 des Antriebszahnrades 22 der Knotereinheit 20 lasten auf der linken Stirnseite des Nabenbereichs 28 des Antriebszahnrades 22 der nächsten angrenzenden Knotereinheit usw.. Bei Anordnungen, in denen der Tragrahmen auf der Antriebswelle zwischen angrenzenden Antriebs zahnrädern angeordnet ist, würden die Köpfe der Sicherungselemente 38 auf axialen Stirnseiten der Manschette 32 des Tragrahmens 24 lasten. Auf jeden Fall wird, wenn die gewünschte Anzahl an Knotereinheiten auf der Antriebswelle 12 montiert ist, die rechte Manschette 36 (nicht gezeigt) auf der Antriebswelle 12 in einer Stellung an der rechten Stirnseite des Nabenbereichs 26 des am weitesten rechts liegenden Antriebszahnrades 22 befestigt. Es ist begreiflich, dass die Einstellelemente 38 auf der linken Stirnseite des Nabenbereichs 28 jedes der Antriebszahnräder 22 angebracht werden könnten, in welchem Falle die Montage der Antriebszahnräder auf der Antriebswelle 12 von rechts nach links erfolgen würde.

Es wird klar, dass der Abstand zwischen den angrenzenden Knotereinheiten 18 und 20 und zwischen allen anderen angrenzenden Knotereinheiten durch die Benutzung eines einfachen Schraubenschlüssels erfolgen kann, indem zuerst die Sicherungselemente 40 der Einstellelemente 38, die den Antriebszahnrädern 22 die von der Einstellung betroffen sind, zuordnet sind, gelöst werden. Dann werden die als Distanzschrauben ausgeführten Einstellelemente 38 eines Antriebszahnrades 22 in die für die benötigte Einstellung passende Richtung gedreht, während die Einstellelemente 38 des andere Antriebszahnrades 22 um die gleich Anzahl an Umdrehungen in die entgegengesetzte Richtung gedreht werden. Die zugeordneten Sicherheitselemente 40 werden dann angezogen, um die Einstellelemente 38 in ihrer eingestellten Stellung zu halten. Es wird deutlich, dass ein Paar von Einstellelementen 38 in jeder der Schultern 36 vorgesehen sein könnte und auf diese Weise einstellbare Anschläge zur Verfügung gestellt werden, zwischen denen die Antriebszahnräder innerhalb der Einstellgrenzen der Anschläge eingestellt werden könnten, wobei eine solche Einstellung keine Entfernung der Schultern 36 erfordert, sobald diese einmal angebracht sind.

Es wird nun auch auf Figur 2 Bezug genommen, in der eine zweite Ausführungsform der Erfindung gezeigt wird, wobei gleiche Komponenten mit den gleichen Bezugszeichen bezeichnet werden. Demnach trägt die Antriebswelle 12 von links nach rechts identische Antriebszahnräder 22', die sich von den Antriebszahnrädern 22 nur dadurch unterscheiden, dass der äußere Durchmesser des Nabenbereichs 26 zu klein ist, um genügend Material zu enthalten, um es zu erlauben, Löcher hinein zu bohren und Gewinde hinein zu schneiden, um die Einstellelemente 38 aufzunehmen. Ein zylindrischer Abstandhalter 42, der einen äußeren Durchmesser aufweist, der wesentlich größer ist als der des Nabenbereichs 26, ist verschiebbar auf der Antriebswelle 12 an einer Stelle zwischen den angrenzenden Knotereinheiten 18 und 20, oder genauer zwischen der rechten Stirnfläche des Nabenbereichs 26' eines der Antriebszahnräder 22' und der linken Stirnfläche des Nabenbereichs 28' des angrenzenden Antriebszahnrades 22' vorgesehen. Eine rechte Stirnfläche des Abstandhalters 42 wirkt mit einer linken Stirnfläche des Nabenbereichs 28' des Antriebszahnrades 22' der Knotereinheit 20 zusammen. Eine linke Stirnfläche des Abstandhalters 42 weist eine Ansenkung bzw. eine Vertiefung 44 auf, in der ein rechter Endbereich des Nabenbereichs 26' des Antriebszahnrades 22' der Knotereinheit 18 aufgenommen wird. Der Bereich dieser linken Stirnfläche der den Nabenbereich 26' umgibt, ist gebohrt und mit Gewinden versehen, um diametral gegenüberliegende Gewindebohrungen aufzuweisen, in die ein Paar als Distanzschrauben ausgebildete Einstellelemente 38 entsprechend eingeschraubt ist. Die Köpfe der Einstellelemente 38 lasten an einer rechten Fläche bzw. Stirnfläche des Antriebszahnrades 22'. Ein gleichartiger Abstandhalter 42 und Einstellelemente 38 sind zwischen den Antriebszahnrädern 22' der Knotereinheit 20 und der nächsten angrenzenden Knotereinheit zur Rechten der Knotereinheit 20 entsprechend angeordnet. Auf diese Weise wird deutlich, dass der Abstandhalter 42 ausreichend Material zum Anbringen der Einstellmittel 38 zur Verfügung stellt, welche durch ein Wirken über den Abstandhalter 42 den Abstand zwischen den Knotereinheiten 18 und 20' einstellen können. Dieser Einstellvorgang ist sehr ähnlich dem, wenn die Einstellmittel 38 in den Naben der Antriebszahnräder 22 angeordnet sind.

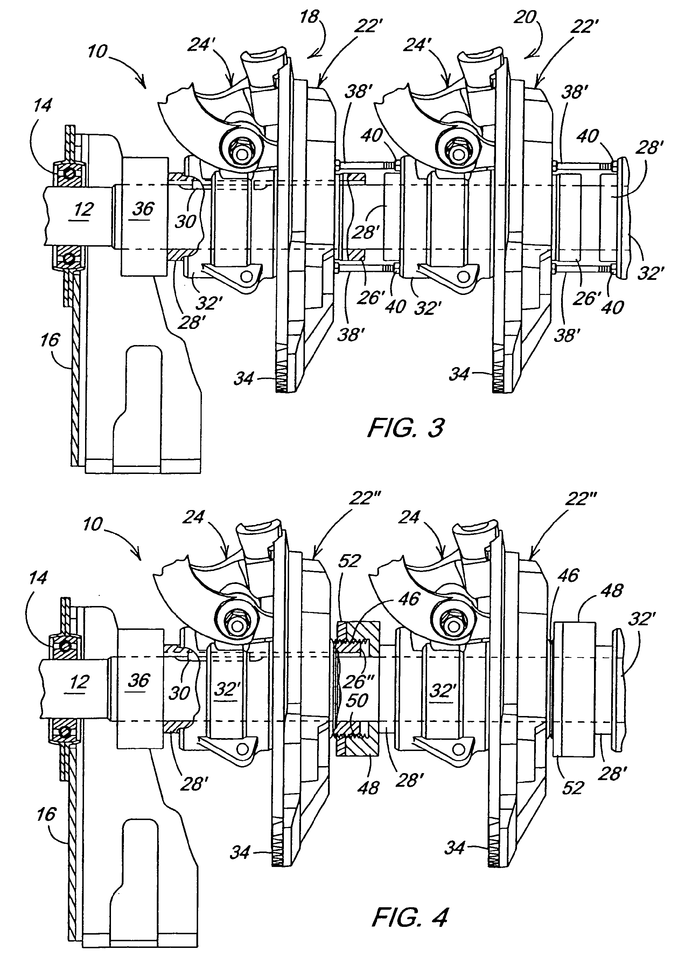

Es wird nun auch auf Figur 3 Bezug genommen, in der eine dritte Ausführungsform der Erfindung gezeigt wird, die Antriebszahnräder 22' entsprechend denen in Figur 2 aufweist, wobei aber die Abstandhalter 42 weggelassen sind. Darüber hinaus sind Tragrahmen 24' vorgesehen, die sich von den Tragrahmen 24 dadurch unterscheiden, dass sie Manschetten 32' aufweisen, die einen größeren Außendurchemsser aufweisen, als die Manschetten 32. Eine linke Stirnfläche dieser Manschetten 32' ist jeweils an diametral gegenüberliegenden Stellen mit Gewindebohrungen versehen und nimmt entsprechende als Distanzschrauben ausgebildete Einstellelemente 38' auf, die den Einstellelemente 38 gleichen, aber länger sind, so dass diese den Abstand zwischen der Manschette 32' und der rechten Stirnfläche des Antriebszahnrades 22' überspannen.

Mit Bezug auf Figur 4 wird eine vierte Ausführungsform der Erfindung beschrieben, die eine Mehrzahl von Antriebszahnrädern 22" aufweist, die den Antriebszahnrädern 22' ähnlich sind, außer dass der rechte Endbereich jedes Nabenbereichs 28 mit einem Gewinde 46 versehen ist. Das Einstellelement 48 weist gemäß diesem Ausführungsbeispiel einen Abstandhalter auf, der dem Abstandhalter 42 aus Figur 2 dadurch ähnelt, dass er eine Innenbohrung aufweist und auf dem rechten Endbereich des Nabenbereichs 28" aufgenommen wird. Anstatt jedoch verschiebbar auf dem Nabenbereich 28" des Antriebszahnrades 22" angeordnet zu sein, ist die Innenbohrung innen mit einem Gewinde 50 versehen und wirkt mit dem Gewinde 46 zusammen, das auf dem Außenbereich des rechten Endbereichs des Nabenbereichs 28" vorgesehen ist. Es ist auch ein Sicherungsmittel 52 in Form einer Kontermutter auf dem Gewinde 46 des Nabenbereichs 28" vorgesehen, um auswählbar gegenüber dem Abstandhalter bzw. dem Einstellelement 48 angezogen zu werden, um diesen an seinem Platz zu sichern. Wiederum sind passende Flächen (nicht gezeigt) sowohl an dem Abstandhalter bzw. das Einstellelement 48 als auch an dem Sicherungselement 52 vorgesehen, an denen während einer Abstandseinstellung ein einfacher Schraubenschlüssel angreifen kann.

Somit wird es deutlich werden, dass die Einstellelemente 38, 38' in Form von Distanzschrauben ein einfaches, effektives Einstellelement zur Verfügung stellen, das direkt zwischen angrenzenden Antriebs zahnrädern auf der Antriebswelle angeordnet sein kann, wie dies in Figur 1 gezeigt wird, das über einen Abstandhalter der auf der Antriebswelle zwischen den Knotereinheiten angeordnet, wie dies in Figur 2 gezeigt wird, wirken kann oder das direkt zwischen dem Tragrahmen und dem Antriebszahnrad, wie dies in Figur 3 gezeigt wird, wirken kann.

Darüber hinaus wird deutlich, dass, obwohl diese Lösung nicht so wirtschaftlich ist wie die Verwendung von Distanzschrauben, ein als Abstandhalter ausgeführtes Einstellelement 48, das eine Gewindeverbindung mit einem Endbereich des Nabenbereichs, wie dies in Figur 4 dargestellt ist, eine axiale Gewindeverbindung zur Verfügung stellt, welche eine einfache, effektive Einstellung des Abstandes zwischen angrenzenden Knotereinheiten zur Verfügung stellt.

Nachdem die bevorzugte Ausführungsform beschrieben wurde, wird es offensichtlich werden, dass verschiedene Veränderungen durchgeführt werden können, ohne den Schutzbereich der Erfindung zu verlassen, wie er durch die folgenden Ansprüche bestimmt wird.

## Patentansprüche

1. Knoteranordnung (10) mit einer Antriebswelle (12), einer Mehrzahl von auf dieser Antriebswelle (12) angebrachten Knotereinheiten (18, 20) mit jeweils einem Antriebszahnrad (22, 22', 22") mit einer Nabe (26, 28), welche auf die Antriebswelle (12) derart aufgesetzt ist, dass sie mit dieser rotieren und mit Bezug auf die Antriebswelle (12) in axialer Richtung bewegt werden kann, und einer Einstelleinrichtung, die eine axiale Lücke zwischen gegenüberliegenden Stirnflächen aneinander angrenzender Knotereinheiten (18, 20) derart einstellbar überspannt, dass sie die axiale Erstreckung der Lücke bestimmt, **dadurch gekennzeichnet, dass** die Einstelleinrichtung zumindest ein Einstellelement (38, 38', 48), durch dessen Hinein- bzw. Herausschrauben der axiale Abstand zwischen den Knotereinheiten (18, 20) verstellt werden kann, und ein Sicherungselement (40, 52) aufweist, mittels dem das Einstellelement lösbar festlegbar ist.

2. Knoteranordnung nach Anspruch 1, **dadurch gekennzeichnet, dass** die Knotereinheit (18, 20) einen Tragrahmen (24) mit einer Hülse (32), die lose auf die Antriebswelle (12) und die Nabe aufgesetzt ist, aufweist.

3. Knoteranordnung nach Anspruch 1 oder 2, **dadurch gekennzeichnet, dass** das Einstellelement (38, 38', 48) eine Distanzschraube aufweist bzw. als eine solche ausgebildet ist, die in eine der Stirnflächen eingeschraubt bzw. aus dieser herausgeschraubt werden kann, und einen Kopf aufweist, der mit der gegenüberliegenden Stirnflächen zusammenwirkt.

4. Knoteranordnung nach einem oder mehreren der vorherigen Ansprüche, **gekennzeichnet durch** ein zweites Einstellelement (38, 38', 48), dass dem ersten Einstellelement (38, 38', 48) zumindest im Wesentlichen diametral gegenüberliegt und vorzugsweise als Distanzschraube ausgebildet ist bzw. eine solche aufweist.

5. Knoteranordnung nach einem oder mehreren der vorherigen Ansprüche, **dadurch gekennzeichnet, dass** das Sicherungselement (40, 52) als eine selbstsichernde Mutter ausgebildet ist bzw. eine solche aufweist, die vorzugsweise mit wenigstens einem der Einstellelemente (38, 38', 48) zusammenwirkt.

6. Knoteranordnung nach einem oder mehreren der vorherigen Ansprüche, **dadurch gekennzeichnet, dass** die Stirnflächen durch entsprechende Endflächen der Naben von Antriebszahnräder (22, 22', 22") angrenzender Knotereinheiten (18, 20) gebildet werden.

7. Knoteranordnung nach Anspruch 2 und einem oder mehreren der Ansprüche 3 bis 5, **dadurch gekennzeichnet, dass** die Stirnflächen entsprechend jeweils durch eine Stirnfläche des Antriebszahnrades (22, 22', 22") einer der Knotereinheiten (18, 20) und eine Endfläche einer Manschette (32) des Tragrahmens (24) eines angrenzenden Tragrahmens (24) gebildet werden, wobei das Einstellelement (38,38') wenigstens eine Distanzschraube aufweist bzw. als eine solche ausgebildet ist, welche in den Endbereich der Manschette (32) einschraubbar bzw. aus diesem herausschraubbar und deren Kopf mit der Stirnfläche des Antriebszahnrades (22, 22', 22'') zusammenwirkt.

8. Knoteranordnung nach einem oder mehreren der Ansprüche 1 bis 6, **dadurch gekennzeichnet, dass** das Einstellelement (38, 38', 48) eine auf der Antriebswelle (12) zwischen angrenzenden Knotereinheiten (18, 20) aufgenommenen Abstandhalter (42) und wenigstens eine Distanzschraube aufweist, die in eine axiale Stirnfläche des Abstandhalters (42) eingeschraubt bzw. aus dieser herausgeschraubt werden kann.

9. Knoteranordnung nach Anspruch 8, **dadurch gekennzeichnet, dass** der Abstandhalter (42) sich radial über die Naben der angrenzenden Antriebszahnräder (22, 22', 22") hinaus erstreckt und die Distanzschraube radial außerhalb und parallel zu den Naben angeordnet ist.

10. Knoteranordnung nach Anspruch 1, **dadurch gekennzeichnet, dass** das Einstellelement (38, 38', 48) einen Abstandhalter aufweist oder als ein solcher ausgebildet ist, der auf der Antriebswelle (12) zwischen angrenzenden Knotereinheiten (18, 20) angeordnet ist, eine der Naben der angrenzenden Antriebszahnräder (22, 22', 22") ein Außengewinde (46) aufweist und der Abstandhalter ein Innengewinde (50) aufweist, dass durch das Außengewinde (46) aufgenommen werden kann.

11. Knoteranordnung nach Anspruch 10, **dadurch gekennzeichnet, dass** das Sicherungselement (20, 52) eine Kontermutter aufweist oder durch eine solche gebildet wird, die auf dem Außengewinde (46) angeordnet ist.

## Claims

1. Knotter arrangement (10), comprising a drive shaft (12), a plurality of knotter units (18, 20) fitted on this drive shaft (12), each knotter unit comprising a drive gear (22, 22', 22") having a hub (26, 28) which is mounted on the drive shaft (12) such that it can rotate with and be moved in the axial direction with respect to the drive shaft (12), and further comprising an adjustment mechanism, which spans an axial gap between opposite front faces of mutually adjacent knotter units (18, 20) adjustably in such a way that it determines the axial extent of the gap, **characterized in that** the adjustment mechanism has at least one adjusting element (38, 38', 48), by whose screwing-in and screwing-out the axial distance between the knotter units (18, 20) can be altered, and a locking element (40, 52), by means of which the adjusting element can be detachably secured.

2. Knotter arrangement according to Claim 1, **characterized in that** the knotter unit (18, 20) has a supporting frame (24) having a sleeve (32) which is loosely mounted on the drive shaft (12) and the hub.

3. Knotter arrangement according to Claim 1 or 2, **characterized in that** the adjusting element (38, 38', 48) has a distance bolt or is configured as such, which can be screwed into or out of one of the front faces and has a head which cooperates with the opposite front faces.

4. Knotter arrangement according to one or more of the previous claims, **characterized by** a second adjusting element (38, 38', 48), that lies at least substantially diametrically opposite the first adjusting element (38, 38', 48) and is preferably configured as a distance bolt or has one such.

5. Knotter arrangement according to one or more of the previous claims, **characterized in that** the locking element (40, 52) is configured as a self-locking nut or has one such, which preferably cooperates with at least one of the adjusting elements (38, 38', 48).

6. Knotter arrangement according to one or more of the previous claims, **characterized in that** the front faces are formed by corresponding end faces of the hubs of knotter units (18, 20) which lie adjacent to drive gears (22, 22', 22").

7. Knotter arrangement according to Claim 2 and one or more of Claims 3 to 5, **characterized in that** each of the front faces is correspondingly formed by a front face of the drive gear (22, 22', 22") of one of the knotter units (18, 20) and an end face of a collar (32) of the supporting frame (24) of an adjacent supporting frame (24), wherein the adjusting element (38, 38') has at least one distance bolt or is configured as such, which can be screwed into or out of the end region of the collar (32) and the head of which cooperates with the front face of the drive gear (22, 22', 22").

8. Knotter arrangement according to one or more of Claims 1 to 6, **characterized in that** the adjusting element (38, 38', 48) has a spacer (42), which is accommodated on the drive shaft (12) between adjacent knotter units (18, 20), and at least one distance bolt, which can be screwed into or out of an axial front face of the spacer (42).

9. Knotter arrangement according to Claim 8, **characterized in that** the spacer (42) extends radially beyond the hubs of the adjacent drive gears (22, 22', 22") and the distance bolt is disposed radially outside of and parallel to the hubs.

10. Knotter arrangement according to Claim 1, **characterized in that** the adjusting element (38, 38', 48) has a spacer or is configured as such, which spacer is disposed on the drive shaft (12) between adjacent knotter units (18, 20), one of the hubs of the adjacent drive gears (22, 22', 22") has an external thread (46), and the spacer has an internal thread (50) that can be received by the external thread (46).

11. Knotter arrangement according to Claim 10, **characterized in that** the locking element (20, 52) has a jam nut or is formed by one such, which is disposed on the external thread (46).

## Revendications

1. Dispositif de nouage (10) comportant un arbre d'entraînement (12), une pluralité d'unités de nouage (18, 20), montées sur ledit arbre d'entraînement (12) et munies chacune d'un pignon d'entraînement (22, 22', 22") avec un moyeu (26, 28), lequel est monté sur l'arbre d'entraînement (12) de telle sorte qu'il tourne avec celui-ci et peut être déplacé dans le sens axial par rapport à l'arbre d'entraînement (12), et un dispositif de réglage, qui couvre de manière réglable une fente axiale entre des faces frontales opposées d'unités de nouage (18, 20) adjacentes, de telle sorte qu'il détermine la dimension axiale de la fente, **caractérisé en ce que** le dispositif de réglage comporte au moins un élément de réglage (38, 38', 48), dont le vissage et le dévissage permettent de régler la distance axiale entre les unités de nouage (18, 20), et un élément de blocage (40, 52) au moyen duquel l'élément de réglage peut être immobilisé de manière amovible.

2. Dispositif de nouage selon la revendication 1, **caractérisé en ce que** l'unité de nouage (18, 20) comporte un bâti de support (24) avec un manchon (32) qui est posé de manière lâche sur l'arbre d'entraînement (12) et le moyeu.

3. Dispositif de nouage selon la revendication 1 ou 2, **caractérisé en ce que** l'élément de réglage (38, 38', 48) comporte une vis d'écartement ou est réalisé en tant que telle, laquelle peut être vissée dans l'une des faces frontales ou être dévissée hors de celle-ci, et une tête qui coopère avec les faces frontales opposées.

4. Dispositif de nouage selon une ou plusieurs des revendications précédentes, **caractérisé par** un deuxième élément de réglage (38, 38', 48), qui est au moins sensiblement diamétralement opposé au premier élément de réglage (38, 38', 48) et est réalisé de préférence sous la forme d'une vis d'écartement ou comporte une telle vis d'écartement.

5. Dispositif de nouage selon une ou plusieurs des revendications précédentes, **caractérisé en ce que** l'élément de blocage (40, 52) est réalisé sous la forme d'un écrou autobloquant ou comporte un tel écrou, qui coopère de préférence avec au moins un des éléments de réglage (38, 38', 48).

6. Dispositif de nouage selon une ou plusieurs des revendications précédentes, **caractérisé en ce que** les faces frontales sont formées par des surfaces d'extrémité correspondantes des moyeux des pignons d'entraînement (22, 22', 22") d'unités de nouage (18, 20) adjacentes.

7. Dispositif de nouage selon la revendication 2 et une ou plusieurs des revendications 3 à 5, **caractérisé en ce que** les faces frontales sont formées chacune, de manière correspondante, par une face frontale du pignon d'entraînement (22, 22', 22") de l'une des unités de nouage (18, 20) et une surface d'extrémité d'une manchette (32) du bâti de support (24) d'un bâti de support (24) adjacent, l'élément de réglage (38, 38') comportant au moins une vis d'écartement ou étant formée en tant que telle, laquelle peut être vissée dans la zone d'extrémité de la manchette (32) ou être dévissée hors de celle-ci, et dont la tête coopère avec les faces frontales du pignon d'entraînement (22, 22', 22").

8. Dispositif de nouage selon une ou plusieurs des revendications 1 à 6, **caractérisé en ce que** l'élément de réglage (38, 38', 48) comporte un écarteur (42), logé sur l'arbre d'entraînement (12) entre des unités de nouage (18, 20) adjacentes, et au moins une vis d'écartement, qui peut être vissée dans une face frontale axiale de l'écarteur (42) ou être dévissée hors de celle-ci.

9. Dispositif de nouage selon la revendication 8, **caractérisé en ce que** l'écarteur (42) s'étend dans le sens radial au-delà des moyeux des pignons d'entraînement (22, 22', 22") adjacents et la vis d'écartement est agencée dans le sens radial à l'extérieur et parallèlement aux moyeux.

10. Dispositif de nouage selon la revendication 1, **caractérisé en ce que** l'élément de réglage (38, 38', 48) comporte un écarteur ou est réalisé en tant que tel, lequel est agencé sur l'arbre d'entraînement (12) entre des unités de nouage (18, 20) adjacentes, l'un des moyens des pignons d'entraînement (22, 22', 22") adjacents comporte un filetage extérieur (46) et l'écarteur comporte un filetage intérieur (50), qui peut entrer en prise avec le filetage extérieur (46).

11. Dispositif de nouage selon la revendication 10, **caractérisé en ce que** l'élément de blocage (20, 52) comporte un contre-écrou ou est formé en tant que tel, lequel est agencé sur le filetage extérieur (46).
